# EUROPEAN PATENT SPECIFICATION

(11) **EP 0 869 197 B1**
(45) Date of publication and mention of the grant of the patent: **25.07.2001**
(21) Application number: 98102260.1
(22) Date of filing: 10.02.1998
(51) Int. Cl.: C22F 1/18, G21C 3/352, G21C 3/356

(54) **Method for the production of a spacer for the positioning of fuel rods**
Verfahren zur Herstellung eines Abstandhalters für Brennelemente
Procédé de fabrication d'und grille d'espacement pour un élément combustible

(30) Priority: 14.02.1997 SE 9700529
(43) Date of publication of application: 07.10.1998
(73) Proprietor: Westinghouse Atom AB, 721 63 Västeras (SE)
(72) Inventor: Dahlbäck, Mats, 724 76 Västeras (SE)
(74) Representative: Berglund, Stefan

(56) References cited:
- EP-A- 0 689 209
- WO-A-95/01639
- US-A- 4 695 426
- US-A- 4 918 710

## Description

### THE BACKGROUND OF THE INVENTION AND PRIOR ART

The present invention relates to a method for the production of a spacer, containing a plurality of spacer elements, for the positioning of fuel rods in a nuclear plant, the method comprising the provision of a sheet which comprises a zirconium-based alloy.

Such spacers are normally present at a plurality of locations along bundles of fuel rods, define grids through which the rods extend, and hold the rods in place.

A method of the above type is already known. In principle, it includes the provision of the sheet of the zirconium-based alloy through a number of rolling stages heat treatments of the sheet being executed between at least certain rolling stages in order to accomplish a relaxation and a structure in the alloy that promotes subsequent rolling stages. However, a sheet of a zirconium-based alloy produced in this conventional way will, due to the micro structure of the material thereby formed, have a different tendency to growth in different directions in the sheet, when being submitted to neutron radiation, which is the case when it is used as a spacer element in different types of nuclear plants. The reason thereto, is that the rolling of the sheet leads to a preferred orientation of the structure in the material. Under presumption that the sheet is generally planar, the major tendency to growth will, in practice, be in a direction which is parallel to the rolling direction, there will be a somewhat less tendency to growth in a direction in the sheet plane perpendicular to the rolling direction, and the least tendency to growth will be in the normal direction, that is in the thickness direction of the sheet. When the sheet is subjected to radiation by neutrons, growth will take place in the or those of these directions which is/are most suscepted to growth, while a corresponding shrinkage takes place in any of or all the other directions. This is the immediate result of the sheet volume being constant when subjected to neutron radiation. During neutron radiation the sheet will, in practice, grow predominantly in the rolling direction, somewhat less crosswise to the rolling direction, and shrink in the thickness direction.

This creates a problem as such a sheet in a conventional way is used to form walls of a spacer for the positioning of fuel rods in a nuclear power plant. More precisely, the spacer defines a number of channels through which the fuel rods run and the walls of which are formed by said sheet. Thereby, the sheet grows in a direction crosswise to the length direction of the channels, while simultaneously the wall thickness decreases, which results in an increase of the cross-sectional area of the channels and a formation of a play between the walls thereof and the fuel rods. Under unfavourable conditions, such as during the operation of a PWR-reactor, the fuel rods will consequently, due to said play, be subjected to a severe wear against those spacer portions with which they thereby come into contact, through vibration. In the long run, this may result in the formation of holes in the walls of the fuel rods and in the leakage of radioactive material to the surroundings. As also the fuel rods are made of a material suscepted to growth, another play-creating effect will arise as the diameter of the fuel rods decreases when they are subjected to neutron radiation.

Prior art remedies the above problem to a certain degree by arranging the direction of the sheets which extends perpendicularly to the lengthwise direction of the channels in such a way that this direction coincides with the direction of the sheets that goes crosswise to the rolling direction. A substantially reduced growth is thereby obtained in this direction, but, none the less, a growth which is sufficiently large to make the problem of the formation of a play is obtained.

The problem is also remedied to a certain extent by punching patches out of the spacer walls, said patches being provided to bear on the fuel rods like springs, and to continue to bear on the latter as growth takes place. However, zirconium alloys have a somewhat low yield strength to be fully suitable as a spring material, whereby, in practice, the patches are only able to compensate a play as large as that which possibly arises due to the decrease of the diameter of the fuel rods. The patches are not able to compensate the total play which is formed between the spacer walls and the outer surfaces of the fuel rods due to diameter shrinkage and spacer wall growth. After a first of a plurality of radiation cycles, the spacer material has also relaxed, whereby the ability of the patches to compensate for the decrease of the diameter of the fuel rods in the subsequent cycles is substantially reduced.

US-A-4 918 710 describes the fabrication of a cross-bracing grid for a fuel assembly. The grid is produced in a zirconium-based alloy. Plates or sheet of the zirconium-based alloy are cold-formed with the plates in the α+β Zr-state. The grid may also be treated in the α-phase. Support bosses for fuel rods are formed by cutting and embossing the plates.

### SUMMARY OF THE INVENTION

An object of the present invention is to provide a method of the type initially defined, which makes it possible to fully or partly avoid abrasive wear of fuel rods against spacer walls, and which is also uncomplicated and not very expensive.

This object is fulfilled by a method according to claim 1.

By means of the β-quenching, a randomisation of the preferred orientation of the structure in the sheet is accomplished, which means that the growth susceptibility is the same in the rolling direction of the sheet as well as in the crosswise direction thereof and the thickness direction. As a result, no growth will take place in the sheet as the latter is subjected to neutron radiation. Thereby, the problem related to a play between fuel rods and spacer walls is almost completely remedied.

The subsequent heat treatment in the α-phase region is necessary in order to give the β-quenched sheet a general corrosion resistance that generally corresponds to the general corrosion resistance of a sheet produced in the conventional way. In order to obtain a good resistance against general corrosion, the temperature should be above 650°C, preferably above 700°C.

After the β-quenching and the heat treatment in the α-phase temperature region, the sheet turns out to have a somewhat increased yield strength and a somewhat greater ductility, resulting in out-punched patches presenting better spring properties and the risk of crack generation in connection to the punching of such patches being smaller.

It should be mentioned that another method that comprises said stages is disclosed in the Swedish patent document SE 502 866, but that the problem in this case is a completely different one, namely to prevent guide rods of control rods in a pressure water reactor from growing in the lengthwise direction as they are inserted between a top and a bottom plate and thereby run the risk of being bent or broken. Characteristic for the present invention is the awareness of the fact that a completely different problem, namely the problem of wear-down of fuel rods in spacers due to the formation of a play between fuel rods and spacer element walls, maybe solved by means of the defined method.

According to a preferred embodiment of the method according to the invention, the sheet is given an increased temperature during the punching.

By increasing the temperature of the sheet during the punching, an increased number of gliding planes in the zirconium-based alloy are activated and the sheet may more easily be deformed without running the risk of having a crack formation therein. As the zirconium-based alloy has an HCP-structure and therefore, at room temperature, presents a small, delimited number of gliding planes, this is an important aspect which contributes in making it easier to provide the spacer elements, that is the sheets, with protruding portions which bear like springs on the fuel rods and thereby contribute by preventing a play from being generated between the walls of the spacer elements and the fuel rods due to the reduction of the diameter of the latter during submission thereof to neutron radiation. Thereby, it should be realised that the protruding portions form a part of the walls of the spacer elements.

According to a preferred embodiment of the method according to the invention, the increased temperature of the sheet during the punching is in the order of 25-500°C, and more preferred in the order of 50-250°C. Thereby, the requested gliding plane activation is in particular obtained without any unfavourable effects on the material as to other aspects, such as for example from a corrosional point of view.

Further features and advantages of the invention will be disclosed in the following, detailed description and the rest of the dependent patent claims.

### BRIEF DESCRIPTION OF THE DRAWINGS

Hereinafter, a detailed description of the method according to the invention and of an embodiment of a spacer produced by the method according to the invention will be given by way of example, with reference to the annexed drawings, in which:
- Fig 1: is a perspective view of a spacer,
- Fig 2: is a perspective view of a spacer cell constituted by portions of spacer elements,
- Fig 3: is a cross-sectional view from above of the spacer cell according to Fig 2, with a fuel rod located therein, and
- Fig 4: is another cross-sectional view of the spacer cell according to Fig 2 and 3.

### DETAILED DESCRIPTION OF PREFERRED EMBODIMENTS

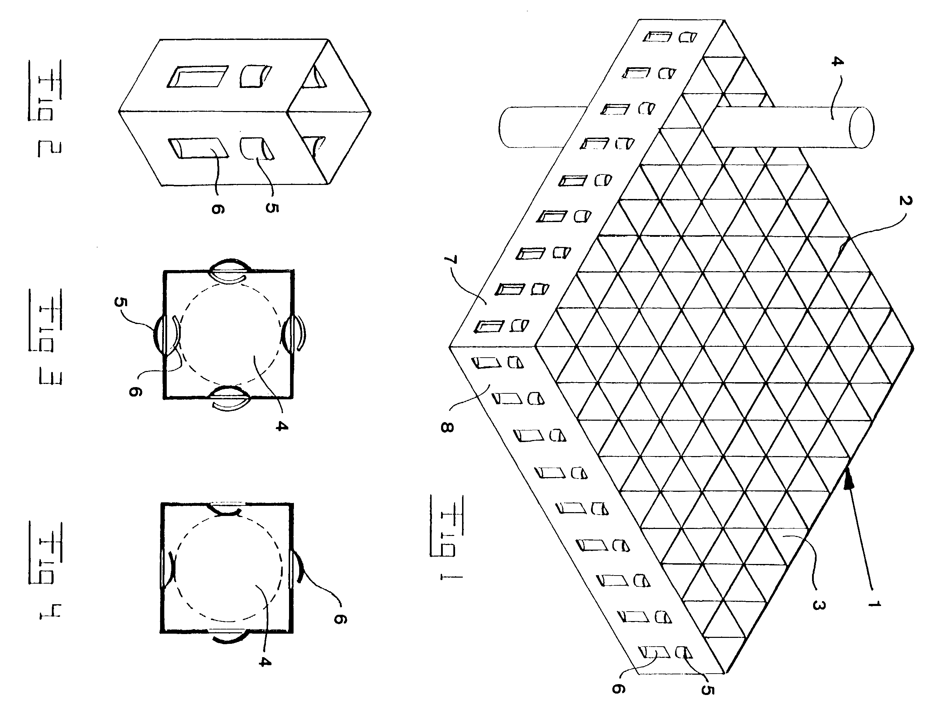

In Fig 1 a typical spacer 1 for the positioning of fuel rods in a nuclear plant is shown. The spacer 1 is formed by a plurality of spacer elements 2, each of which is formed by a generally flat sheet and welded together in such a way that they form a plurality of cells 3 of the spacer 1. The cells 3 define channels with a rectangular cross-section, said channels being provided to be penetrated by fuel rods 4, only one of which is shown by way of example. The spacer is also penetrated by and fixed to guide rods for control rods, but these guide rods are not shown in the figure.

The sheet by which the spacer elements 2 are made comprises a zirconium-based alloy. Such alloys are characterized in that they are neutron transparent and present a good corrosion resistance in corrosive media. Zirconium-based alloys are above all useful as wall material in spacers in pressure water reactors PWR, but also in boiling water reactors, BWR. However, due to the particular conditions in BWR, INCONEL is the normally used spacer material in boiling water reactors, whereby the problem with plays due to growth does not appear. It should also be mentioned that the number of cells normally is larger by PWR's than by BWR's (normally 17x17 for PWR and 5x5 for BWR).

Each spacer element comprises at least one portion 5,6 which protrudes from the plane of the sheet itself. These portions 5,6 comprise a relatively rigid, non-resilient projection 5 on one hand, and a resilient flap 6, both of which have been pressed out of the sheet plane during punching thereof. The projection 5 and the flap 6 project in opposite directions from the sheet plane, that is the plane of the spacer element 2. Each spacer cell 3 comprises two flaps or spring elements 6 and two projections or protuberances 5. The spring elements 6 are preferably positioned at spacer elements 2 of the spacer cell 3 that are positioned adjacently and perpendicularly to each other, as can be seen in Fig 3. Thereby, a stable and still resilient fixing of the fuel rod 4 in the spacer cell 3 is accomplished.

As, during operation, the spacer 1 and the fuel rods 4 are subjected to neutron radiation, a certain diameter reduction takes place in the fuel rods 4 due to growth, said rods preferably also being made of a zirconium-based alloy. The fixing of the fuel rods 4 in the spacer cells 3 remains, however, good as the spring elements or flaps 6 are arranged to resiliently bear on the fuel rods 4 also when a certain reduction of the diameter thereof takes place. At first hand this applies to a first radiation cycle, after which a relaxation of the spacer material takes place and the spring effect decreases. As the spacer elements 2 are produced in accordance with the inventive method, practically no growth takes place therein, whereby no further source that causes a play between the fuel rods 4 and the spacer elements 2 is present.

The spacer elements and the spacer described above are produced in the following way according to the invention:

Spacer elements 2 and outer walls 7, 8 of the spacer 1 are produced from a sheet of a zirconium-based alloy which has been β-quenched and subsequently heat treated in the α-phase temperature region of the alloy by cutting or punching sheets with a shape and a size that correspond to the ones of the outer walls 7, 8 and the individual spacer elements 2. The spacer elements 2 only differ from the outer walls 7, 8 by having vertical slots (not shown) which enable them to cross each other and form the net which defines the spacer cells. The slots suitably extend to half the height of the spacer elements and they depart from the bottom of those spacer elements that are directed in one of the directions, and from above by those that are directed perpendicularly thereto. However, it is not excluded that also the outer walls are provided with slots.

Subsequently, before or simultaneously therewith, these sheets are punched in such a way that portions 5, 6 of the sheet are forced to project from a surface that, here, extends in the plane of the sheet.

These portions 5, 6 are identical to the projections or protuberations 5 and the flaps or spring elements 6 described above.

During the punching, the sheet is given an increased temperature as the punching tool which is used is given an increased temperature. Thereby, the temperature of the sheet during the punching will be in the order of 25-500°C, preferably in the order of 50-250°C, and most preferably in the order of 50-150°C. Even though other ways of heating the sheet are not excluded, this way is particularly advantageous when the sheet, as in this case, is thin or very thin.

Thereafter, the spacer elements 2 are joined in such a way that they form the spacer cells 3 described above, which in their turn, together, form the spacer 1 itself. The joining is suitably performed by means of welding, even though other methods are not excluded.

Furthermore, it should be mentioned that the spacer hereby obtained may be used in all sorts of reactors, but is particularly advantageous as it comes to the choice of spacers for a pressure water reactor PWR, by reasons already mentioned above.

It should be realised that a plurality of variations and modifications of the inventive method of course are possible within the scope of the claims.

## Claims

1. A method of production of a spacer (1), comprising a plurality of spacer elements (2), for the positioning of fuel rods (4) in a nuclear plant, including the provision of a sheet which comprises a zirconium-based alloy, wherein the method also comprises the steps of:
subjecting the sheet to a first heat treatment comprising β quenching,
subjecting the sheet to a subsequent heat treatment in the α-phase temperature region of the zirconium-based alloy, and then
punching portions (5, 6) of the sheet in order to make those portions protrude from a surface of the sheet and to accomplish support surfaces for the fuel rods.

2. A method according to claim 1, characterized in that the sheet is given an increased temperature during the punching.

3. A method according to claim 2, characterized in that the increased temperature of the sheet during the punching is in the order of 25-500°C, preferably 50-250°C.

4. A method according to any one of claims 1-3, characterized in that the punching comprises the step of pressing at least one protruding portion (6) out from a surface of the sheet, said portion (6) being arranged to resiliently bear on a fuel rod (4).

## Patentansprüche

1. Verfahren zur Herstellung eines Abstandshalters (1), der eine Vielzahl von Abstandshalter-Elemente (2) enthält, zur Positionierung von Brennstäben (4) in einer Kernkraftanlage unter Verwendung eines Bleches aus einer Zirkoniumlegierung, wobei das Verfahren auch folgende Schritte enthält:
- das Blech wird einer ersten Wärmebehandlung ausgesetzt, zu der eine Beta-Abschreckung gehört,
- das Blech wird einer nachfolgenden Wärmebehandlung in einem zur Alpha-Phase gehörenden Temperaturbereich der Zirkoniumlegierung ausgesetzt,
- und dann werden Abschnitte (5,6) des Bleches in der Weise gestanzt, daß diese Abschnitte aus der Oberfläche des Bleches derart herausragen, daß sie Anlageflächen für die Brennstäbe bilden.

2. Verfahren nach Anspruch 1, **dadurch gekennzeichnet,** daß das Blech während des Stanzens auf eine erhöhte Temperatur gebracht wird.

3. Verfahren nach Anspruch 2, **dadurch gekennzeichnet,** daß die erhöhte Temperatur des Bleches während des Stanzens in der Größenordnung von 25 bis 500°C, vorzugsweise von 50 bis 250°C, liegt.

4. Verfahren nach einem der Ansprüche 1 bis 3, **dadurch gekennzeichnet,** daß zu dem Stanzen der Schritt gehört, mindestens einen vorstehenden Abschnitt (6) aus der Oberfläche des Bleches herauszupressen, wobei dieser Abschnitt (6) so beschaffen ist, daß er nachgiebig an einem Brennstab (4) anliegt.

## Revendications

1. Procédé de fabrication d'une grille (1) d'espacement comprenant une pluralité d'éléments (2) d'espacement pour la mise en position de crayons (4) combustibles d'une centrale nucléaire qui consiste à prévoir une feuille qui comprend un alliage à base de zirconium, le procédé comprenant également les stades de :
soumission de la feuille à un premier traitement thermique comprenant une trempe β,
soumission de la feuille à un traitement thermique subséquent dans le domaine de température de phase α de l'alliage à base de zirconium, puis
poinçonnage de parties (5, 6) de la feuille pour faire en sorte que ces parties fassent saillies d'une surface de la feuille et ménagent des surfaces de support des crayons combustibles.

2. Procédé suivant la revendication 1, caractérisé en ce qu'il consiste à donner à la feuille une température plus élevée pendant le poinçonnage.

3. Procédé suivant la revendication 2, caractérisé en ce que la température plus élevée de la feuille pendant le poinçonnage est de l'ordre de 25 à 500°C, et de préférence de 50 à 250°C.

4. Procédé suivant l'une quelconque des revendications 1 à 3, caractérisé en ce que le poinçonnage comprend le stade de refoulement d'au moins une partie (6) en saillie hors d'une surface de la feuille, cette partie (6) étant agencée pour porter élastiquement sur un crayon (4) combustible.
